# EUROPEAN PATENT APPLICATION

(11) **EP 4 290 275 A1**
(43) Date of publication of application: **13.12.2023**
(21) Application number: 22770243.8
(22) Date of filing: 14.02.2022
(51) Int. Cl.: G01S 17/10, G01S 17/32, G01S 7/486

(54) **DETECTION APPARATUS AND TERMINAL DEVICE**

(30) Priority: 18.03.2021 CN 202110292907
(71) Applicant: Huawei Technologies Co., Ltd., Shenzhen, Guangdong 518129 (CN)
(72) Inventor: CHEN, Yuchen, Shenzhen, Guangdong 518129 (CN); ZHU, Hai, Shenzhen, Guangdong 518129 (CN); ZOU, Bing, Shenzhen, Guangdong 518129 (CN)
(74) Representative: Pfenning, Meinig & Partner mbB
(86) International application number: PCT/CN2022/076175
(87) International publication number: WO 2022/193888

(57) **Abstract**

A detection apparatus and a terminal device are provided, and may be used in the field of autonomous driving, intelligent driving, or the like. The detection apparatus may include: An emitting component (301) emits a first beam. Alight splitting component (3021) changes an optical path of a return optical signal from a detection region to obtain a first return optical signal and a second return optical signal, propagates the first return optical signal to a first detection component (3022), and propagates the second return optical signal to a second detection component (3023). The first detection component (3022) detects the first return optical signal to obtain a first electrical signal. The second detection component (3023) detects the second return optical signal to obtain a second electrical signal. The first electrical signal and the second electrical signal are for determining distance information of a target. When a detection distance is less than a preset value, detection precision of the first detection component (3022) is greater than detection precision of the second detection component (3023). When the detection distance is not less than the preset value, the detection precision of the first detection component (3022) is not greater than the detection precision of the second detection component (3023). In this way, the detection apparatus can implement high-precision detection within a full detection distance range

## Description

### CROSS-REFERENCE TO RELATED APPLICATIONS

This application claims priority to Chinese Patent Application No. 202110292907.X, filed on March 18, 2021 and entitled "DETECTION APPARATUS AND TERMINAL DEVICE", which is incorporated herein by reference in its entirety.

### TECHNICAL FIELD

This application relates to the field of detection technologies, and in particular, to a detection apparatus and a terminal device.

### BACKGROUND

With development of informatization, intelligent terminals gradually enter people's daily life. Sensing systems are playing an increasingly important role in intelligent terminals. At present, sensing systems have been widely used in many fields such as industrial production, cosmic development, ocean exploration, environmental protection, resource investigation, medical diagnosis, and bioengineering. A three-dimensional (three-dimensional, 3D) sensing system can obtain complete geometric information in a three-dimensional scene and accurately digitize the scene by using images with depth information, to implement functions such as high-precision recognition, positioning, reconstruction, and scene understanding, and is a hot research topic in the field of sensing systems.

Technologies applicable to 3D sensing systems mainly include stereo imaging, structured light, the time-of-flight (time-of-flight, TOF) technology, and the like. The TOF is an important technology used in the 3D sensing systems because the TOF has advantages such as a long detection distance and high resolution. The TOF technology is a depth measurement technology of measuring a round-trip time of an actively emitted light pulse among an emitting component, a target, and a receiving component, and obtaining accurate distance information based on the round-trip time and the speed of light. The TOF technology is mainly divided into two categories. The first category is referred to as a direct time-of-flight (direct time-of-flight, d-TOF) technology, and the other category is referred to as an indirect time-of-flight (indirect time-of-flight, i-TOF) technology. Since depth measurement precision of the d-TOF technology is irrelevant to a detection distance, the d-TOF technology is usually for long-distance detection and has low ranging precision. When the d-TOF technology is applied to a short-distance (for example, less than 0.5 m) detection scenario, the measurement precision cannot meet a requirement. Depth measurement precision of the i-TOF technology decreases as the detection distance increases, and the detection precision is lower when the i-TOF technology is applied to a long-distance detection scenario.

To sum up, how to implement high-precision measurement within a full detection distance range is a technical problem that needs to be resolved urgently at present.

### SUMMARY

This application provides a detection apparatus and a terminal device, to implement high-precision measurement within a full detection distance range.

According to a first aspect, this application provides a detection apparatus. The detection apparatus may include an emitting component and a receiving component. The receiving component includes a light splitting component, a first detection component, and a second detection component. When a detection distance is less than a preset value, detection precision of the first detection component is greater than detection precision of the second detection component. When the detection distance is not less than the preset value, the detection precision of the first detection component is not greater than the detection precision of the second detection component. The emitting component is configured to emit a first beam. The light splitting component is configured to change an optical path of prorogation of a return optical signal that is from a detection region and that is for the first beam to obtain a first return optical signal and a second return optical signal, propagate the first return optical signal to a first detection component, and propagate the second return optical signal to a second detection component. The first detection component is configured to detect the received first return optical signal, to obtain a first electrical signal. The second detection component is configured to detect the received second return optical signal, to obtain a second electrical signal. The first electrical signal and the second electrical signal are for determining distance information of a target in the detection region.

Based on this solution, the light splitting component changes the optical path of prorogation of the return optical signal from the detection region to obtain a first return optical signal and a second return optical signal, to propagate the first return optical signal to the first detection component, and propagate the second return optical signal to the second detection component. In addition, when the detection distance is less than the preset value, the detection precision of the first detection component is greater than the detection precision of the second detection component. When the detection distance is not less than the preset value, the detection precision of the first detection component is not greater than the detection precision of the second detection component. Therefore, when the detection distance is less than the preset value, the target is detected based on the first detection component. When the detection distance is not less than the preset value, the target is detected based on the second detection component. In this way, high-precision detection may be implemented within the full detection distance range.

In a possible implementation, the first detection component includes an i-TOF image sensor, and the second detection component includes a d-TOF image sensor.

The i-TOF image sensor is suitable for short-distance detection, and has high detection precision during short-distance detection. The d-TOF image sensor is suitable for long-distance detection, and has higher detection precision than that of the i-TOF image sensor during long-distance detection. Through the cooperation of i-TOF image sensor and d-TOF image sensor, high-precision detection within the full detection distance range can be achieved.

In a possible implementation, the light splitting component is configured to propagate, based on a received second control signal, the first return optical signal to the first detection component in a second time sequence, or propagate the second return optical signal to the second detection component in a third time sequence.

The light splitting component propagates corresponding return optical signals respectively to different detection components in different time sequences, so that the first detection component works in the second time sequence, and the second detection component works in the third time sequence, to be specific, the two detection components work in different time sequences.

Further, optionally, the second time sequence and the third time sequence are alternately arranged. It may also be understood that the first detection component and the second detection component work alternately.

Because the first detection component and the second detection component work alternately, a dynamic detection capability of the detection apparatus is improved. Especially for a high-speed moving object, an imaging offset between the first detection component and the second detection component can be reduced, which helps avoid a problem that affects image quality, such as smearing, in a fused image.

A time division-based light splitting component is provided. For example, the light splitting component may be, for example, a liquid crystal on silicon (liquid crystal on silicon, LCOS), an optical switch, a fiber circulator, or a digital micromirror device (digital micromirror device, DMD).

In a possible implementation, the emitting component is configured to emit the first beam based on a received first control signal. The first control signal is for controlling a first time sequence in which the emitting component emits the first beam.

By controlling a time sequence in which the emitting component emits the first beam, the emitting component may be synchronized with the first detection component and the second detection component, to further improve detection precision of the detection apparatus.

Further, optionally, the emitting component is configured to emit the first beam based on a received first modulation signal. The first modulation signal may be a pulse wave or a continuous wave.

In a possible implementation, the light splitting component is configured to split the return optical signal to obtain the first return optical signal and the second return optical signal, propagate the first return optical signal to the first detection component, and propagate the second return optical signal to the second detection component.

The light splitting component performs space division on the received return optical signal, to enable the first detection component and the second detection component to work simultaneously, thereby helping improve an imaging speed of a depth map of the target.

A space division-based light splitting component is provided. For example, the light splitting component may be, for example, a beam splitter or a diffractive optical element.

In a possible implementation, the emitting component is configured to emit the first beam based on a received second modulation signal. The second modulation signal includes a pulse wave.

In this way, both the first return optical signal and the second return optical signal may be pulse waves, to enable the first detection component and the second detection component to simultaneously be in a working mode.

In a possible implementation, the detection apparatus further includes a processing control component, configured to receive the first electrical signal from the first detection component and the second electrical signal from the second detection component; and determine the distance information of the target based on the first electrical signal and the second electrical signal.

Further, optionally, the processing control component may be configured to determine, based on the first electrical signal, a phase difference between emission of the first beam and reception of the first return optical signal, determine, based on the phase difference, a first time difference between the emission of the first beam and the reception of the first return optical signal, and determine, based on the second electrical signal, a second time difference between the emission of the first beam and reception of the second return optical signal; and determine first distance information of the target based on the first time difference, and determine second distance information of the target based on the second time difference.

In a possible implementation, the processing control component is further configured to determine error distance information corresponding to a multipath interference region or a strength error region in the first distance information; determine target distance information that is in the second distance information and that corresponds to the error distance information; and replace the error distance information with the target distance information. It may also be understood that the error distance information corresponding to the multipath interference region or the strength error region is removed from the first distance information, and the target distance information that is in the second distance information and that corresponds to the error distance information is used for supplementation.

Because the i-TOF image sensor may generate a multipath interference region or a strength error region, the error distance information corresponding to the multipath interference region or the strength error region is removed from in the first distance information corresponding to the i-TOF image sensor, and is replaced with the target distance information that is in the second distance information and that corresponds to the error distance information, to help improve accuracy of the distance information of the target detected by the detection apparatus, and further improve quality of forming a depth map of the target.

In a possible implementation, the processing control component is further configured to remove distance information of a distance greater than the preset value from the first distance information to obtain third distance information, and generate a first image based on the third distance information; remove distance information of a distance not greater than the preset value from the second distance information to obtain fourth distance information, and generate a second image based on the fourth distance information; and fuse the first image and the second image to obtain a depth map of the target.

The first distance information is obtained based on the first electrical signal of the first detection component, and the second distance information is obtained based on the second electrical signal of the second detection component. In addition, when the detection distance is less than the preset value, detection precision of the first detection component is greater than detection precision of the second detection component. Therefore, third distance information with higher precision can be obtained by removing the distance information of a distance greater than the preset value from the first distance information. When the detection distance is not less than the preset value, the detection precision of the first detection component is not greater than the detection precision of the second detection component. Therefore, high-precision fourth distance information is obtained by removing distance information of a distance not greater than the preset value from the second distance information. The depth map of the target obtained based on the third distance information and the fourth distance information has high detection precision within the full detection distance range.

In a possible implementation, the processing control component is further configured to multiply distance information of a distance greater than the preset value in the first distance information by a first confidence, and multiply distance information of a distance not greater than the preset value in the first distance information by a second confidence, to obtain fifth distance information, and generate a third image based on the fifth distance information, where the second confidence is greater than the first confidence; multiply distance information of a distance not greater than the preset value in the second distance information by a third confidence, and multiply distance information of a distance greater than the preset value in the second distance information by a fourth confidence, to obtain sixth distance information, and generate a fourth image based on the sixth distance information, where the fourth confidence is greater than the third confidence; and fuse the third image and the fourth image to obtain a depth map of the target.

The first distance information is obtained based on the first electrical signal of the first detection component, and the second distance information is obtained based on the second electrical signal of the second detection component. In addition, when the detection distance is less than the preset value, detection precision of the first detection component is greater than detection precision of the second detection component. When the detection distance is not less than the preset value, the detection precision of the first detection component is not greater than the detection precision of the second detection component. Therefore, the first distance information is divided into two parts, a part that is not greater than the preset value is multiplied by the second confidence that is larger, and a part that is greater than the preset value is multiplied by the first confidence that is smaller, to obtain the fifth distance information. The second distance information is also divided into two parts, a part that is not greater than the preset value is multiplied by the third confidence that is smaller, and a part that is greater than the preset value is multiplied by the fourth confidence that is larger, to obtain the sixth distance information. The depth map of the target obtained based on the fifth distance information and the sixth distance information has high detection precision within the full detection distance range.

In a possible implementation, the processing control component is further configured to multiply the first distance information by a fifth confidence to obtain seventh distance information, and generate a fifth image based on the seventh distance information, where the fifth confidence is negatively correlated with the first distance information; multiply the second distance information by a sixth confidence to obtain eighth distance information, and generate a sixth image based on the eighth distance information, where the sixth confidence is positively correlated with the second distance information; and fuse the fifth image and the sixth image to obtain a depth map of the target.

The first distance information is obtained based on the first electrical signal of the first detection component, and the second distance information is obtained based on the second electrical signal of the second detection component. In addition, when the detection distance is less than the preset value, detection precision of the first detection component is greater than detection precision of the second detection component. When the detection distance is not less than the preset value, the detection precision of the first detection component is not greater than the detection precision of the second detection component. Therefore, as the distance of the first distance information increases, the fifth confidence by which the first distance information is multiplied is increasingly small. Conversely, as the distance corresponding to the second distance information increases, the sixth confidence by which the second distance information is multiplied is increasingly small. In this way, the sixth distance information may account for larger proportion when the distance is short, and account for a smaller proportion when the distance is long. Conversely, the eighth distance information accounts for a smaller proportion when the distance is short, and accounts for a larger proportion when the distance is long. Therefore, the depth map of the target obtained based on the seventh distance information and the eighth distance information has high detection precision within the full detection distance range.

According to a second aspect, this application provides a terminal device, including any detection apparatus according to any one of the first aspect or the possible implementations of the first aspect and a processor. The processor may be configured to control the detection apparatus to detect a detection region.

In a possible implementation, the terminal device may be, for example, a radar (such as a lidar), a smartphone, a vehicle, a smart home device, an intelligent manufacturing device, a robot, an uncrewed aerial vehicle, or an intelligent transportation device.

For technical effects that can be achieved in the second aspect, refer to descriptions of beneficial effects in the first aspect. Details are not described herein again.

### BRIEF DESCRIPTION OF DRAWINGS

FIG. 1a is a schematic diagram of a ranging principle of a d-TOF technology according to this application;
FIG. 1b is a schematic diagram of a ranging principle of an i-TOF technology according to this application;
FIG. 1c is a schematic diagram of a principle of multipath interference according to this application;
FIG. 2a is a schematic diagram of a possible application scenario of a detection apparatus according to this application;
FIG. 2b is a schematic diagram of a possible application scenario of another detection apparatus according to this application;
FIG. 2c is a schematic diagram of a possible application scenario of still another detection apparatus according to this application;
FIG. 3 is a schematic diagram of a structure of a detection apparatus according to this application;
FIG. 4 is a schematic diagram of time sequence control of a first beam emitted by a light source according to this application;
FIG. 5a is a schematic diagram of a structure of an LCoS according to this application;
FIG. 5b is a schematic diagram of a structure of an optical switch according to this application;
FIG. 5c is a schematic diagram of a structure of a combination of another optical switch according to this application;
FIG. 5d is a schematic diagram of a structure of a fiber circulator according to this application;
FIG. 6 is a schematic diagram of a structure of a beam splitter according to this application;
FIG. 7a is a schematic diagram of a structure of an i-TOF image sensor according to this application;
FIG. 7b is a schematic diagram of a structure of a d-TOF image sensor according to this application;
FIG. 8 is a schematic diagram of ranging ranges of two image sensing components according to this application;
FIG. 9a is a schematic diagram of a structure of still another detection apparatus according to this application;
FIG. 9b is a schematic diagram of a structure of still another detection apparatus according to this application; and
FIG. 10 is a schematic diagram of a structure of a terminal device according to this application.

### DESCRIPTION OF EMBODIMENTS

The following describes in detail embodiments of this application with reference to the accompanying drawings.

The following describes some terms in this application. It should be noted that, these explanations are intended for ease of understanding by a person skilled in the art, and are not intended to limit the protection scope claimed in this application.

### 1. Detection precision

Detection precision refers to a minimum distance with which two different targets can be distinguished.

### 2. Image fusion (Image fusion)

Image fusion is an image processing technology and refers to performing image processing, specific algorithm-based calculation, and the like on image data that is about a same target and that is collected from a plurality of source channels, to extract beneficial information in the respective channels to the greatest extent, and finally, fusing a high-quality (for example, in terms of brightness, definition, and color) image. The fused image has higher resolution than the original image.

The foregoing describes some terms involved in this application, and the following describes technical features involved in this application. It should be noted that, these explanations are intended for ease of understanding by a person skilled in the art, and are not intended to limit the protection scope claimed in this application.

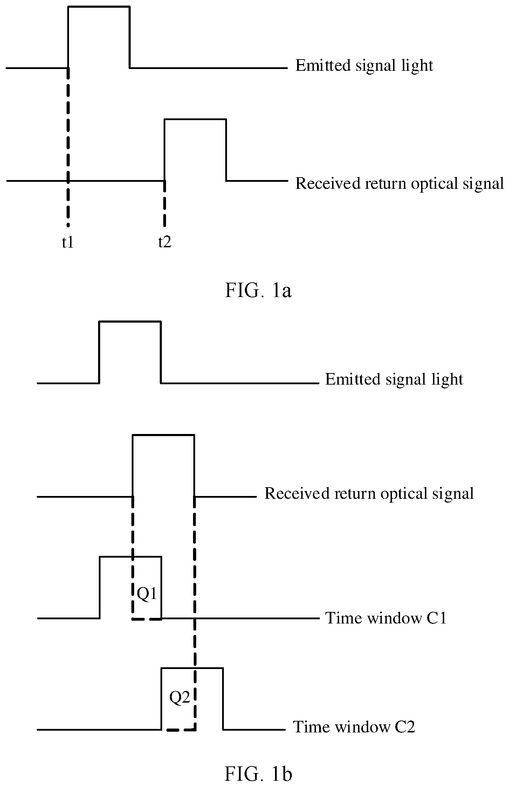

FIG. 1a is a schematic diagram of a ranging principle of a d-TOF technology according to this application. The d-TOF technology is directly measuring a difference (that is, t2-t1) between an emission time t1 of signal light and a reception time t2 of a return optical signal, where the return optical signal is obtained through reflecting the signal light by a target in a detection region; and then, calculating distance information of the target based on d=C×(t2-t1), where d represents a distance of the target, and C represents the speed of light.

It should be noted that, the signal light is usually pulsed laser light. Due to a limitation of laser safety and a limitation of power consumption of the detection apparatus, energy of the emitted signal light is limited, but the detection region needs to be covered completely. Therefore, when the return optical signal obtained through reflecting the signal light by the target returns to a receiver, energy loss is serious. In addition, ambient light, as noise, interferes with the detection and restoration performed by the receiver on the return optical signal. Therefore, the d-ToF technology requires a detector with high sensitivity to detect the return optical signal. For example, a single-photon avalanche diode (single-photon avalanche diode, SPAD) has sensitivity of detecting a single photon, and the SPAD is a diode biased with a high reverse voltage in its operating state. Reverse bias creates a strong electric field inside the device. When a photon is absorbed by the SPAD and converted into a free electron, the free electron is accelerated by the internal electric field to obtain enough energy to generate a free electron and hole pair when it hits another atom. Moreover, a newly generated carrier continues to be accelerated by the electric field, to generate more carriers through collision. Such a geometrically amplified avalanche effect enables the SPAD to have an almost infinite gain, so that a large current pulse is output, to detect a single photon.

FIG. 1b is a schematic diagram of a ranging principle of an i-TOF technology according to this application. The i-TOF technology is indirectly obtaining a time difference between an emission time of signal light and a reception time of a return optical signal by using the phase. Specifically, charge values transferred by a current assisted photonic demodulator (current assisted photonic demodulator, CAPD) are collected in different time windows. (that is, a time window C1 and a time window C2), to parse out a phase delay between the return optical signal and the signal light, and distance information of a target is calculated based on d=1/2*C*ΔT*Q2/(Q1+Q2), where d represents a distance of the target, C represents the speed of light, ΔT represents a pulse wave width of the optical signal emitted by the light source, Q1 represents the charge value transferred by the current-assisted photon demodulator in the time window C1, Q2 represents the charge value transferred by the current-assisted photon demodulator in the time window C2, and ΔT*Q2/(Q1+Q2) represents a time difference. Generally, the i-ToF technology may be classified into continuous wave (continuous wave, CW) modulation and pulse (pulse, PL) wave modulation based on different modulation modes. In the continuous wave modulation, a continuous sinusoidal signal may be emitted, and the distance is parsed out by parsing the phase of the sinusoidal signal. In pulse modulation, repeated pulse signals may be emitted, and the distance is parsed out by parsing the phases of the pulse signals.

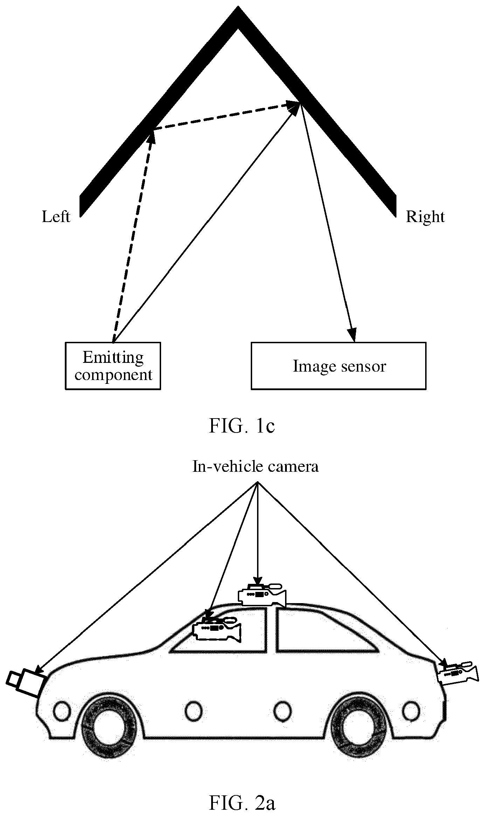

In an actual application scenario, there is complex diffuse reflection or even specular reflection. In principle, multi-path interference (multi-path interference, MPI) causes a measured value of the distance to increase, resulting in impact on an effect of three-dimensional reconstruction. FIG. 1c is a schematic diagram of a principle of multipath interference according to this application. In FIG. 1c, using measuring a wall corner as an example, a light ray (dashed line) emitted by an emitting component to the left is reflected twice, and is received by an image sensor at the same time as a light ray (solid line) emitted to the right. The dual depth information causes an error in distance information measured by the image sensor.

It should be noted that, a detected strength error may also affect the effect of three-dimensional reconstruction. For example, regions with different reflectivity on a same plane may present different distances. For example, when a detected target is a black-and-white chessboard, a detection result may show that the chessboard is uneven.

Based on the foregoing content, the following provides a possible application scenario of the detection apparatus in this application. For example, referring to FIG. 2a, the detection apparatus may be a camera module (for example, a depth camera), and the camera module may be installed in a vehicle (for example, an unmanned vehicle, a smart vehicle, an electric vehicle, or a digital vehicle) as an in-vehicle camera. The in-vehicle camera can obtain measurement information, such as distances from surrounding objects, in real time or periodically, to provide necessary information for operations such as lane correction, distance keeping, and reversing. The in-vehicle camera can implement the following: (a) target recognition and classification, for example, recognition of various lane lines, traffic light recognition, and traffic sign recognition; (b) free space detection (FreeSpace), for example, division of safety boundaries (travelable region) of a vehicle, which is mainly division of a vehicle, a common road edge, a curb edge, a boundary without an obstacle visible, an unknown boundary, and the like; (c) a capability of detecting laterally moving targets, for example, detecting pedestrians and vehicles crossing intersections; and (d) localization and mapping, for example, localization and mapping based on the visual simultaneous localization and mapping (simultaneous localization and mapping, SLAM) technology.

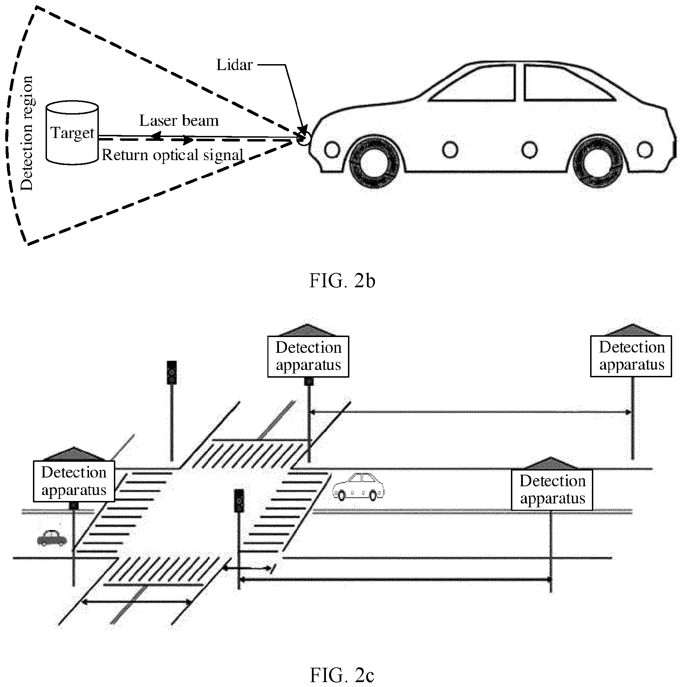

The detection apparatus may alternatively be a lidar. The lidar may alternatively be mounted on a vehicle as an in-vehicle lidar, refer to FIG. 2b. The in-mounted lidar may obtain, in real time or periodically, detected measurement information such as a latitude and longitude, a speed, and an orientation of a vehicle, and distances from surrounding objects, and further, implement, based on the measurement information, assisted driving or unmanned driving of the vehicle in combination with an advanced driving assistant system (advanced driving assistant system, ADAS). For example, a location of the vehicle is determined by using the longitude and latitude, or a traveling direction and destination of the vehicle in a future period of time are determined by using the speed and the orientation, or a quantity and density of obstacles around the vehicle are determined by using the distances from the surrounding objects. The in-vehicle lidar may also implement a surveying and mapping function and the like.

FIG. 2b is a schematic diagram of a detection principle of a lidar according to this application. The lidar emits a laser beam in a specific direction. If there is a target within a specific distance along the emission direction of the laser beam, the target may reflect the received laser beam back to the lidar (referred to as a return optical signal). The lidar may determine information about the target based on the return optical signal, for example, a distance from the target, a moving speed of the target, an attitude or point cloud map of the target, and the like. It should be understood that in this example, a lidar deployed at the front end of a vehicle is used as an example. The lidar may sense a sector region shown by a dashed-line box, and the sector region may be referred to as a detection region of the lidar.

Detection apparatuses have been widely used in fields such as unmanned driving, autonomous driving, assisted driving, intelligent driving, a connected vehicle, security surveillance, surveying and mapping. It should be noted that, the application scenarios shown above are merely examples. The detection apparatus provided in this application may be further used in a plurality of other scenarios, and is not limited to the scenarios in the foregoing examples. For example, the detection apparatus may be further used in a terminal device or a component disposed in the terminal device. The terminal device may be, for example, a smartphone, a smart home device, an intelligent manufacturing device, a robot, an uncrewed aerial vehicle, or an intelligent transportation device (for example, an automated guided vehicle (automated guided vehicle, AGV) or an unmanned transport vehicle). For another example, the detection apparatus may also be installed on the uncrewed aerial vehicle and serve as an airborne detection apparatus and the like. For another example, the detection apparatus may also be installed on a roadside traffic device (for example, a road side unit (road side unit, RSU)) and serve as a roadside traffic detection apparatus, referring to FIG. 2c, so that intelligent vehicle-road coordination can be implemented.

As described in the background, a detection apparatus in the conventional art cannot achieve high-precision measurement within a full detection distance range.

In view of this, this application provides a detection apparatus. The detection apparatus can implement high-precision measurement within a full detection distance range of detection.

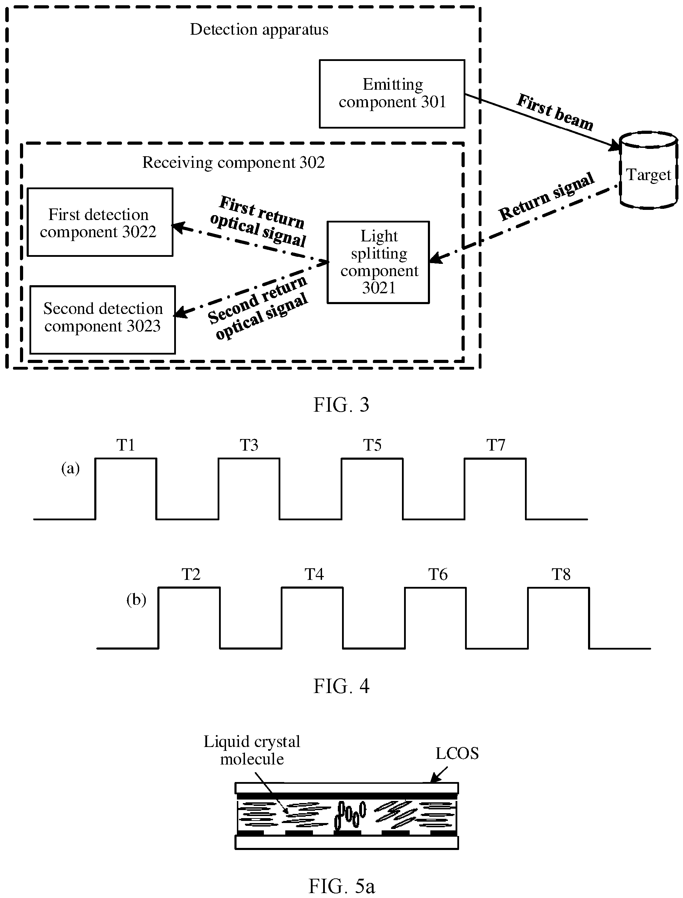

The following describes in detail the detection apparatus provided in this application with reference to FIG. 3 to FIG. 9b.

Based on the foregoing content, FIG. 3 is a schematic diagram of a structure of a detection apparatus according to this application. The detection apparatus may include an emitting component 301 and a receiving component 302. The receiving component 302 includes a light splitting component 3021, a first detection component 3022, and a second detection component 3023. When the detection distance is less than a preset value, detection precision of the first detection component 3022 is greater than detection precision of the second detection component 3023. When the detection distance is not less than the preset value, the detection precision of the first detection component 3022 is not greater than the detection precision of the second detection component 3023. The emitting component 301 is configured to emit a first beam. The light splitting component 3021 is configured to change an optical path of prorogation of a return optical signal that is from a detection region and that is for the first beam to obtain a first return optical signal and a second return optical signal, propagate the first return optical signal to a first detection component, and propagate the second return optical signal to a second detection component. The first detection component 3022 is configured to detect the received first return optical signal, to obtain a first electrical signal. Alternatively, it may be understood as that the first detection component 3022 is configured to perform optical-to-electrical conversion on the received first return optical signal, to obtain a first electrical signal. The second detection component 3023 is configured to detect the received second return optical signal, to obtain a second electrical signal. Alternatively, it may be understood as that the second detection component 3023 is configured to perform optical-to-electrical conversion on the received second return optical signal, to obtain a second electrical signal. The first electrical signal and the second electrical signal are for determining distance information of a target in the detection region.

Based on the foregoing detection apparatus, the light splitting component changes the optical path of prorogation of the return optical signal from the detection region to obtain a first return optical signal and a second return optical signal, to propagate the first return optical signal to the first detection component, and propagate the second return optical signal to the second detection component. In addition, when the detection distance is less than the preset value, the detection precision of the first detection component is greater than the detection precision of the second detection component. When the detection distance is not less than the preset value, the detection precision of the first detection component is not greater than the detection precision of the second detection component. Therefore, when the detection distance is less than the preset value, the target is detected based on the first detection component. When the detection distance is not less than the preset value, the target is detected based on the second detection component. In this way, high-precision detection may be implemented within the full detection distance range. Further, when three-dimensional modeling is performed based on the obtained high-precision distance information, an accurate three-dimensional model can be obtained.

The first detection component is suitable for short-distance detection and the second detection component is suitable for long-distance detection. In a possible implementation, the first detection component includes an i-TOF image sensor, and the second detection component includes a d-TOF image sensor.

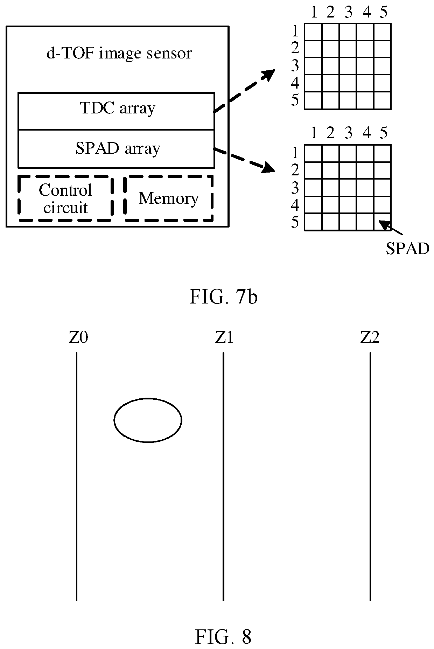

In a possible implementation, the preset value may be a distance obtained when detection precision of the first detection component is the same as the detection precision of the second detection component. For example, if the detection precision of the first detection component is 2% of the distance, and the detection precision of the second detection component is 2 nanoseconds (ns), that is, a constant detection distance of C*t/2=0.3 meters (m), the preset value may be 15 m, where C is the speed of light. With reference to FIG. 8, Z1 represents the preset value.

In a possible implementation, strengths of the first return optical signal and the second return optical signal may be the same, or may be different. This is not limited in this application.

It should be noted that, when the detection apparatus is a camera module, the detection region may also be understood as a field of view range of the camera module. A target object includes, but is not limited to, a single object. For example, when a person is photographed, the target object includes a person and an environment around the person, that is, the environment around the person is also a part of the target object.

The following respectively describes functional components shown in FIG. 3, to provide specific implementation solutions as examples. For ease of description, none of the emitting component, the receiving component, and the light splitting component, the first detection component, and the second detection component included in the receiving component is marked below.

### 1. Emitting component

In a possible implementation, the emitting component may include a light source. It may also be understood that the detection apparatus may include a self-illuminating light source.

In a possible implementation, the light source may be a single light source, or may be a light source array including a plurality of light sources. For example, the light source may be, for example, a vertical cavity surface emitting laser (vertical cavity surface emitting laser, VCSEL), or may be or an edge emitting laser (edge emitting laser, EEL). An EEL-based light source may implement independent addressing, and the so-called independent addressing means that any light source in a light source array may be independently strobed (or referred to as being lightened, turned on, or powered on).

In a possible implementation, the first beam emitted by the light source may be visible light, infrared light, or ultraviolet light. For example, a wavelength of the first beam emitted by the light source may be in a range of 905 nanometers (nm). Further, optionally, the emitting module may further include a diffuser (or referred to as a beam expander or a light homogenizing element). The diffuser may be configured to expand the first beam emitted by the light source into a uniform first beam, and project the uniform first beam onto the detection region. The uniform first beam may also be referred to as a flood beam.

In a possible implementation, the light source may control, based on the received first control signal, a first time sequence for emitting the first beam. Further, optionally, the light source may further determine a waveform of the first beam based on a received first modulation signal. The first modulation signal may be a pulse wave, a continuous wave, or the like. The continuous wave may be, for example, a sine wave or a square wave.

FIG. 4 is a schematic diagram of time sequence control of a first beam emitted by a light source according to this application. A first time sequence in FIG. 4 includes a period T1, a period T2, a period T3, a period T4, a period T5, a period T6, a period T7, and a period T8. The first beam modulated based on the first modulation signal may be emitted separately in the period T1, the period T2, the period T3, the period T4, the period T5, the period T6, the period T7, and the period T8.

With reference to FIG. 4, if it is the i-TOF image sensor of the detection apparatus that works in the period T1, the period T3, the period T5, and the period T7, the first modulation signal in the period T1, the period T3, the period T5, and the period T7 may have any waveform in a sine wave, a square wave, a pulse wave, or a continuous wave. If it is the d-TOF image sensor of the detection apparatus that works in the period T2, the period T4, the period T6, and the period T8, the first modulation signal in the period T2, the period T4, the period T6, and the period T8 is a pulse wave.

In another possible implementation, the light source may emit the first beam based on a received second modulation signal. The second modulation signal includes a pulse wave. With reference to FIG. 4, the second modulation signal is a pulse wave in all of the period T1, the period T2, the period T3, the period T4, the period T5, the period T6, the period T7, and the period T8. It may also be understood that the light source may continuously emit pulse waves based on the received second modulation signal.

It should be noted that, a plurality of modulation signals may be included in each period, for example, a plurality of pulse waves may be included in the period T1 and a plurality of pulse waves may be included in the period T2.

### 2. Light splitting component

The following describes cases in which the light splitting component performs light splitting in space or light splitting in time.

Case 1: The light splitting component performs light splitting in time (in a time division manner).

Based on the case 1, the light splitting component propagates, based on a received second control signal, the first return optical signal to the first detection component in a second time sequence, or propagate the second return optical signal to the second detection component in a third time sequence. The second control signal may be transmitted by the processing control component to the light splitting component. For details, refer to the following descriptions of the processing control component. Details are not described herein again. Further, optionally, the second time sequence and the third time sequence are alternately arranged.

With reference to FIG. 4, (a) in FIG. 4 may represent the second time sequence, and (b) in FIG. 4 may represent the third time sequence. Specifically, in the period T1, the period T3, the period T5, and the period T7, the light splitting component propagates the received first return optical signal to the first detection component. To be specific, in the period T1, the period T3, the period T5, and the period T7, the detection apparatus works in the mode of the first detection component. In the period T2, the period T4, the period T6, and the period T8, the light splitting component propagates the received second return optical signal to the second detection component. To be specific, in the period T2, the period T4, the period T6, and the period T8, the detection apparatus works in the mode of the second detection component.

It should be noted that, the time sequence of the light splitting component may be controlled based on an actual requirement, and FIG. 4 is merely an example. In addition, the time sequence of the light splitting component is synchronized with the first time sequence in which the light source emits the first beam. Specifically, in the period T1, the light source starts to emit a first beam (that is, a rising edge of a light source signal), and the light splitting component synchronously propagates a received first return optical signal to the first detection component; in the period T2, the light source starts to re-emit the first beam (that is, the rising edge of the light source signal), and the light splitting component synchronously emits a received second return optical signal to the second detection component; in the period T3, the light source starts to re-emit the first beam (that is, the rising edge of the light source signal), and the light splitting component synchronously emits a received first return optical signal to the first detection component; and so on. It should be understood that synchronization between the light source and the light splitting component is usually performed at a periodicity of tens of milliseconds (ms) (depending on a frame rate of the detection apparatus).

It should also be noted that, the period T1 is the second time sequence, the period T2 is the third time sequence. The period T1 and the period T2 are alternately arranged, and so on. In addition, the period T1 and the period T2 are one detection periodicity of the detection apparatus, and one depth map of the target may be fused based on distance information detected in the period T1 and the period T2.

As stated above, for example, four possible structures of the light splitting component performing light splitting in time are shown. It may also be understood that the four structures of the light splitting component shown below may control optical switching in a time sequence.

A structure 1 is a DMD.

For example, when the DMD is at an angle α, the DMD may propagate the first return optical signal to the first detection component. When the DMD is at an angle β, the DMD may propagate the second return optical signal to the second detection component.

In a possible implementation, the DMD may be controlled based on the received second control signal to be at the angle α in the second time sequence and be at the angle β in the third time sequence, to propagate the first return optical signal to the first detection component in the second time sequence and propagate the second return optical signal to the second detection component in the third time sequence. It may also be understood that light splitting may be implemented in time by controlling an angle of the DMD.

With reference to FIG. 4, in the period T1, the period T3, the period T5, and the period T7, the DMD is at the angle α. In the period T2, the period T4, the period T6, and the period T8, the DMD is at the angle β.

A structure two is an LCOS.

FIG. 5a is a schematic diagram of a structure of an LCoS according to this application. The LCoS may adopt a phase-type LCoS, and directions of long axes of liquid crystal molecules may be changed by a voltage signal or a current signal applied to the LCoS, to change refractivity of the LCoS, thereby changing a phase of light passing through the LCoS, and further, changing an angle at which the light exits from the LCoS. This is equivalent to rotating a light exit angle by using a phase delay, so that light splitting can be implemented in time.

In a possible implementation, a first phase map may be applied to the LCoS in the second time sequence based on the received second control signal. The first phase map may control a voltage of each pixel in the LCoS in the second time sequence, so that the LCoS propagates the first return optical signal to the first detection component in the second time sequence. A second phase map is applied to the LCoS in the third time sequence. The second phase map may control a voltage of each pixel in the LCoS in the third time sequence, so that the LCoS propagates the second return optical signal to the second detection component in the third time sequence.

With reference to FIG. 4, in the period T1, the period T3, the period T5, and the period T7, the first phase map is applied to the LCoS. In the period T2, the period T4, the period T6, and the period T8, the second phase map is applied to the LCoS.

A structure 3 is an optical switch.

An optical switch is an optical path conversion device, and is an optical device having one or more optional transmission ports. A function of the optical switch is to perform physical switching or a logical operation on an optical signal in an optical transmission line or an integrated optical circuit. The optical switch may be a conventional mechanical optical switch, a micro mechanical optical switch, a thermo-optical switch, a liquid crystal optical switch, an electro-optical switch, an acousto-optical switch, and the like.

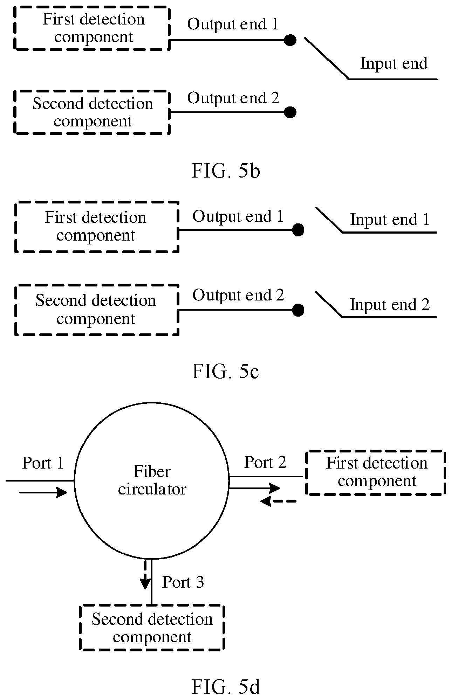

FIG. 5b is a schematic diagram of a structure of an optical switch according to this application. A form of the optical switch may be 1×2, that is, one input end and two output ends. One input end of the optical switch is configured to receive the first return optical signal and the second return optical signal from the detection region. An output end 1 of the optical switch is connected to the first detection component, and an output end 2 of the optical switch is connected to the second detection component. When the output end 1 is connected to the input end, a link of the output end 1 is in a connected state. In this case, the input end receives the first return optical signal from the detection region, and propagates the first return optical signal to the first detection component. When the output end 2 is connected to the input end, a link of the output end 2 is in a connected state. In this case, the input end receives the second return optical signal from the detection region, and propagates the second return optical signal to the second detection component.

In a possible implementation, based on the second control signal, the output end 1 may be controlled to connect to the input end in the second time sequence, and the output end 2 may be controlled to connect to the input end in the third time sequence.

With reference to FIG. 4, in the period T1, the period T3, the period T5, and the period T7, the output end 1 is controlled to connect to the input end. In the period T2, the period T4, the period T6, and the period T8, the output end 2 is controlled to connect to the input end.

FIG. 5c is a schematic diagram of a structure of a combination of another optical switch according to this application. A form of the optical switch may be 2×2, that is, two input ends and two output ends. An input end 1 is configured to connect to an output port 1, and an input end 2 is configured to connect to an output port 2. When the input end 1 is connected to the output end 1, a link of the input end 1 is in a connected state. In this case, the input end 1 receives the first return optical signal from the detection region, and propagates the first return optical signal to the first detection component. When the input end 2 is connected to the output end, a link of the input end 2 is in a connected state. In this case, the input port 2 receives the second return optical signal from the detection region, and propagates the second return optical signal to the second detection component.

In a possible implementation, based on the second control signal, the output end 1 may be controlled to connect to the input end 1 in the second time sequence, and the output end 2 may be controlled to connect to the input end 2 in the third time sequence.

With reference to FIG. 4, in the period T1, the period T3, the period T5, and the period T7, the output end 1 is controlled to connect to the input end 1. In the period T2, the period T4, the period T6, and the period T8, the output end 2 is controlled to connect to the input end 2.

A structure 4 is a fiber circulator.

A fiber circulator is a multi-port non-reciprocal optical device, where an optical signal can only be propagated in one direction. FIG. 5d is a schematic diagram of a structure of a fiber circulator according to this application. If an optical signal is input from a port 1, the optical signal is output from a port 2. If an optical signal is input from the port 2, the optical signal is output from a port 3. Output losses of the optical signals are both small. When an optical signal is input from the port 2, a loss is large when the optical signal is output from the port 1. Similarly, when light is input from the port 3, a loss is large when the optical signal is output from the port 1 or the port 2.

In a possible implementation, based on the second control signal, the first return optical signal may be controlled to be input from the port 1 in the second time sequence, and the second return optical signal may be controlled to be input from the port 3 in the third time sequence

It should be understood that all of the structure 1, the structure 2, the structure 3, and the structure 4 that are provided above are examples. This is not limited in this application.

Case 2: The light splitting component performs light splitting in space (in a space division manner).

Based on the case 2, the light splitting component may split a return optical signal from the detection region to obtain a first return optical signal and a second return optical signal, propagate the first return optical signal to a first detection component, and propagate the second return optical signal to a second detection component. For example, the light splitting component may divide a return optical signal from the detection region into a first return optical signal and a second return optical signal based on a strength ratio. The strength ratio may be 1:1, that is, strength of the first return optical signal is the same as strength of the second return optical signal. Alternatively, the strength ratio may be another possible ratio. For example, strength of the first return optical signal is greater than strength of the second return optical signal, or strength of the first return optical signal is less than strength of the second return optical signal.

As stated above, for example, two possible structures of the light splitting component performing light splitting in space are shown.

A structure A is a beam splitter (beam splitter).

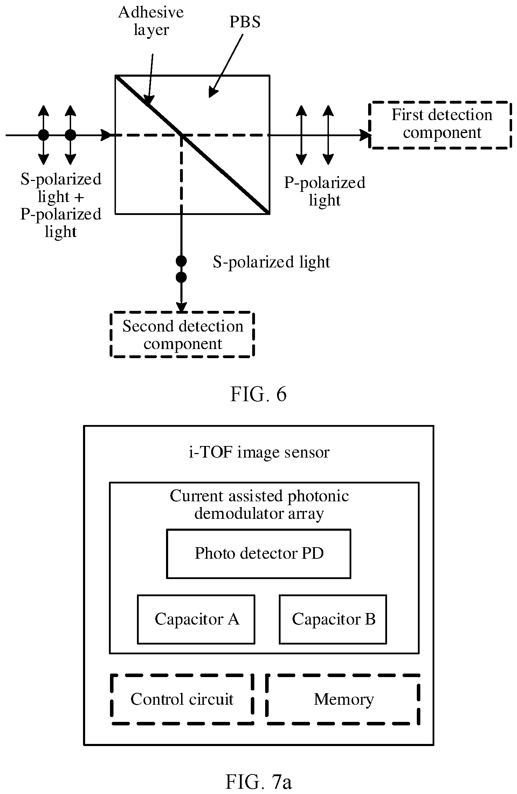

In a possible implementation, the beam splitter may be, for example, a beam splitter (beam splitter, BS) prism or a beam splitter plate. A beam splitter prism is formed by plating one or more thin films (for example, beam splitter films) on a surface of a prism, and a beam splitter plate is formed by plating one or more thin films (for example, beam splitter films) on a surface of a glass plate. Both the beam splitter prism and the beam splitter plate use films that have different transmissivity and reflectivity to incident light, to split the return optical signal from the detection region into two return optical signals, to obtain the first return optical signal and the second return optical signal. For example, the beam splitter is a polarizing beam splitter. The polarizing beam splitter may include two polarizing beam splitters (polarizing beam splitter, PBS), and inclined surfaces of the two PBSs are attached through an adhesive layer (referring to FIG. 6). A PBS is a cubic structure formed by plating one or more layers of thin films on inclined surfaces of right-angle prisms and then fusing the right-angle prisms through an adhesive layer. When a beam is incident at a Brewster's angle, transmissivity of P-polarized light is 1, and transmissivity of S-polarized light is less than 1. After the beam passes through a multilayer film structure many times at the Brewster's angle, the P-polarized light is completely transmitted, and most of the S-polarized light is reflected (at least 90% or more).

For example, the polarizing beam splitter may split an incident return optical signal (P-polarized light and S-polarized light) from the detection region into horizontally polarized light (namely, S-polarized light) and vertically polarized light (namely, P-polarized light), that is, the first return optical signal and the second return optical signal. The P-polarized light is completely transmitted, the S-polarized light is reflected at an angle of 45 degrees, and an exit direction of the S-polarized light and an exit direction of the P-polarized light form an angle of 90 degrees.

It should be noted that, FIG. 6 shows an example in which the first return optical signal is P-polarized light and the second return optical signal is S-polarized light. It should be understood that the first return optical signal may alternatively be S-polarized light, and correspondingly, the second return optical signal is P-polarized light.

A structure B is a diffractive optical element (diffractive optical element, DOE).

In a possible implementation, the diffractive optical element may split a return optical signal from the detection region to obtain a first return optical signal and a second return optical signal, propagate the first return optical signal to a first detection component, and propagate the second return optical signal to a second detection component.

It should be understood that both the structure A and the structure B provided above are examples. This is not limited in this application.

It should be noted that, if the light splitting component is based on a structure of the foregoing case 1, the waveform of the first beam emitted by the emitting component is related to whether the detection apparatus works in a d-TOF image sensor mode or an i-TOF image sensor mode. If the detection apparatus works in the i-TOF image sensor mode, the waveform of the first beam may be any waveform in a sine wave, a square wave, a pulse wave, or a continuous wave. If the detection apparatus works in the d-TOF image sensor mode, the waveform of the first beam may be a pulse wave. If the light splitting component is based on a structure of the foregoing case 2, regardless of whether the detection apparatus works in a d-TOF image sensor mode or an i-TOF image sensor modem, the waveform of the first beam emitted by the emitting component is always a pulse wave.

### 3. First detection component

In a possible implementation, the first detection component may be an i-TOF image sensor. The i-TOF image sensor may be configured to perform optical-to-electrical conversion on the received first return optical signal, to obtain a first electrical signal. FIG. 7a is a schematic diagram of a structure of an i-TOF image sensor according to this application. The i-TOF image sensor may include a CAPD array. The CAPD may include a photo detector (photo detector, PD), a capacitor A, and a capacitor B. The PD may perform optical-to-electrical conversion on the received first return optical signal, and calculate a phase delay between the return optical signal and the signal light based on a charge difference between the capacitor A and the capacitor B, to calculate the first distance information of the target.

Further, optionally, the d-TOF image sensor may further include a memory and a control circuit. The control circuit may store a time-of-flight detected by the CAPD into the memory.

It should be noted that, the i-TOF image sensor is suitable for short-distance detection, to be specific, detection precision of the i-TOF image sensor is higher when the detection distance is less than a preset value.

### 4. Second detection component

In a possible implementation, the second detection component may be a d-TOF image sensor. The d-TOF image sensor may be configured to perform optical-to-electrical conversion on the received second return optical signal, to obtain a second electrical signal.

FIG. 7b is a schematic diagram of a structure of a d-TOF image sensor according to this application. The d-TOF image sensor may include a SPAD array and a time-to-digital converter (time-to-digital converter, TDC) array. In this example, the SPAD array is a 5×5 array, and the TDC array is a 5×5 array. After detecting the first pulse signal, a TDC starts timing. After one SPAD in at least one SPAD corresponding to the TDC that starts timing receives a return optical signal, the TDC stops the timing. Therefore, a time difference between emission and reception of an optical signal, that is, a time-of-flight of the optical signal, can be detected.

Further, optionally, the d-TOF image sensor may further include a memory and a control circuit. The control circuit may store a time-of-flight detected by the SPAD/TDC into the memory.

It should be noted that, depth measurement precision of the d-TOF technology is independent of a detection distance, and mainly depends on a time-to-digital converter (time-to-digital converter, time-to-digital converter) in a d-TOF sensor module. The d-TOF is suitable for long-distance detection. When the detection distance is not less than the preset value, detection precision of the d-TOF is high.

In a possible implementation, a resolution range of the d-TOF image sensor may be [8 megapixels, 48 megapixels], and a resolution range of the i-TOF image sensor may also be [8 megapixels, 48 megapixels]. For example, the resolution of the d-TOF image sensor may be 8 megapixels, 12 megapixels, 20 megapixels, or 48 megapixels. The resolution of the i-TOF image sensor may be 8 megapixels, 12 megapixels, 20 megapixels, or 48 megapixels. It should be understood that the resolution of the d-TOF image sensor may alternatively be greater than 48 megapixels, for example, may alternatively be 52 megapixels, 60 megapixels, 72 megapixels, or the like. The resolution of the i-TOF image sensor may alternatively be greater than 48 megapixels, for example, may alternatively be 52 megapixels, 60 megapixels, 72 megapixels, or the like.

In a possible implementation, the detection apparatus may further include a processing control component. The processing control component is described in detail below.

### 5. Processing control component

In a possible implementation, the processing control component may be connected to the emitting component and the receiving component respectively, to control the emitting component and the receiving component. The details are described as follows:

In a possible implementation, the processing control component may generate a first control signal, and emit the first control signal to the emitting component (for example, a light source in the emitting component), to control a first time sequence in which the light source emits the first beam. Further, optionally, the processing control component may generate a first modulation signal and emit the first modulation signal to the light source to control a waveform of the first beam emitted by the light source. The waveform may be, for example, a pulse wave or a continuous wave.

In another possible implementation, with reference to the foregoing case 1 of the light splitting component, the processing control component may further generate a second control signal, and send the second control signal to the light splitting component, to enable the light splitting component to propagate the first return optical signal to the first detection component in the second time sequence, or propagate the second return optical signal to the second detection component in the third time sequence.

In a possible implementation, the second time sequence and the third time sequence are alternately arranged, that is, it indicates that the first detection component and the second detection component work alternately. With reference to FIG. 4, the first detection component works in the period T1, the second detection component works in the period T2, the first detection component works in the period T3, the second detection component works in the period T4, and so on.

Further, optionally, the processing control component may receive a first electrical signal from the i-TOF image sensor, and determine, based on the first electrical signal, a phase difference between emission of the first beam and receiving the first return optical signal by the i-TOF image sensor, calculate, based on the phase difference, a first time difference (namely, a time-of-flight of the first beam) between the emission of the first beam and the receiving the first return optical signal by the i-TOF image sensor, and determine the first distance information of the target based on the first time difference. For a specific process, refer to the descriptions of the principle in FIG. 1b.

Correspondingly, the processing control component may receive a second electrical signal from the d-TOF image sensor, determine, based on the second electrical signal, a second time difference between emission of the first beam and receiving the second return optical signal by the d-TOF image sensor, and determine the second distance information of the target based on the second time difference. For details, refer to the descriptions in FIG. 1a.

It should be noted that, the processing control component also needs to control the first time sequence in which the light source emits the first beam and TDC synchronization in the d-TOF image sensor. For example, the processing control component controls the light source to emit the first pulse light, and simultaneously controls the TDC to start timing. After the SPAD receives the second return optical signal, the TDC stops the timing and waits. When the processing control component controls the light source to emit the second pulse light, and simultaneously controls the TDC to start second timing, similarly, after the SPAD receives the second return optical signal, the TDC stops the second timing and waits, and so on. It should be understood that a measurement range of the TDC is less than a periodicity of the pulse light. In general, the synchronization of the TDC in the d-TOF image sensor with the light source emitting the first beam is synchronization at a periodicity of hundreds of nanoseconds (ns). It should be understood that a synchronization periodicity between the TDC and the light source emitting the first beam is related to a detection distance.

In a possible implementation, the processing control component may generate the distance information of the target based on the first distance information and the second distance information.

Because the i-TOF image sensor may generate a multipath interference region or a strength error region, distance information detected in some regions is incorrect, and quality of an image is seriously affected. An elliptical region within a range of Z0 to Z1 in FIG. 8 represents a multipath interference region or a strength error region. To ensure high-quality imaging within a full detection distance range, distance information corresponding to the elliptical region may be removed and be replaced (or referred to as supplemented) with distance information corresponding to the elliptical region in the d-TOF image sensor.

In a possible implementation, the processing control component may remove error distance information corresponding to the multipath interference region or the strength error region from the first distance information, obtain target distance information corresponding to the error distance information from the second distance information, and supplement the error distance information with the target distance information. That is, the processing control component may determine error distance information corresponding to the multipath interference region or the strength error region in the first distance information, determine target distance information corresponding to the error distance information in the second distance information, and replace the error distance information with the target distance information.

Further, optionally, the processing control component may generate a first image based on the first distance information, generate a second image based on the second distance information, and fuse the first image and the second image to obtain a depth map of the target. Alternatively, the first distance information for generating the first image may be the first distance information obtained after the error distance information is replaced with the target distance information. In this way, precision of the distance information of the target detected by the detection apparatus is improved, and quality of the formed depth map of the target can be improved.

In a possible implementation, the processing control component may generate the depth map of the target based on the first electrical signal from the first detection component and the second electrical signal from the second detection component. For ease of description of the solution, in the following, a high-precision measurement distance range for which the i-TOF image sensor is suitable is Z0 to Z1, and a high-precision measurement distance range for which the d-TOF image sensor is suitable is Z1 to Z2, where Z0<Z1<Z2, referring to FIG. 8.

The following shows two possible implementations of image fusion as examples, to implement high-precision detection within a full detection distance range.

An implementation 1 is removing inaccurate distance information.

In a possible implementation, the processing control component may remove distance information of a distance greater than the preset value from the first distance information to obtain third distance information, and generate a first image based on the third distance information; remove distance information of a distance not greater than the preset value from the second distance information to obtain fourth distance information, and generate a second image based on the fourth distance information; and fuse the first image and the second image to obtain a depth map of the target.

With reference to FIG. 8, the processing control component may calculate distance information within a full detection distance range, that is, distance information within a range of Z0 to Z2, based on the first electrical signal from the i-TOF image sensor; and remove distance information of a distance greater than a preset value from the distance information within the full detection distance range, that is, remove distance information within a range of Z1 to Z2, to obtain third distance information, that is, obtain distance information within a range of Z0 to Z1. The processing control component may calculate distance information within a full detection distance range, that is, distance information within a range of Z0 to Z2, based on the second electrical signal from the d-TOF image sensor; and remove distance information of a distance not greater than a preset value from the distance information within the full detection distance range, that is, remove distance information within a range of Z0 to Z1, to obtain fourth distance information, that is, obtain distance information within a range of Z1 to Z2. The processing control component may generate a first image based on the first distance information within the range of Z0 to Z1, generate a second image based on the second distance information within the range of Z1 to Z2, and fuse the first image and the second image to obtain a depth map of the target.

Because the i-TOF image sensor has high precision at a short distance, its precision decreases linearly as the distance increases, and the d-TOF image sensor keeps precision unchanged within a measurement range, the precision can be kept at a high level at a long distance, but precision of a near target usually cannot meet a requirement. The first image is generated by using the third distance information from the i-TOF image sensor at a short distance, and the second image is generated by using the fourth distance information from the d-TOF image sensor at a long distance, and then, the first image and the second image are fused to obtain a depth map of the target. Therefore, high-precision imaging within the full detection distance range can be obtained.

An implementation 2 is confidence-based weighted averaging.

In a possible implementation, confidences may be designed based on relative detection precision of the i-TOF image sensor and the d-TOF image sensor. For the i-TOF image sensor, a lower confidence is set for a larger distance value. For the d-TOF image sensor, a higher confidence is set for a larger distance value. Alternatively, it may be understood that a relationship between the first distance information and a confidence may be set. For example, a larger distance corresponding to the first distance information indicates a lower confidence. A larger distance corresponding to the second distance information indicates a higher confidence.

In an example 1, distance information of a distance greater than the preset value in the first distance information is multiplied by a first confidence, and distance information of a distance not greater than the preset value in the first distance information is multiplied by a second confidence, to obtain fifth distance information, and generate a third image based on the fifth distance information. The second confidence is greater than the first confidence. Distance information of a distance not greater than the preset value in the second distance information is multiplied by a third confidence, and distance information of a distance greater than the preset value in the second distance information is multiplied by a fourth confidence, to obtain sixth distance information, and generate a fourth image based on the sixth distance information. The fourth confidence is greater than the third confidence. The third image and the fourth image are fused to obtain a depth map of the target.

With reference to FIG. 8, the processing control component may calculate distance information within a full detection distance range, that is, distance information within a range of Z0 to Z2, based on the first electrical signal from the i-TOF image sensor; and multiply distance information (that is, distance information within a range of Z1 to Z2) of a distance greater than the preset value (Z1) within the full detection distance range by a first confidence, and multiply distance information (that is, distance information within a range of Z0 to Z1) of a distance not greater than the preset value within the full detection distance range by a second confidence, to obtain fifth distance information, and generate a third image based on the fifth distance information. The second confidence is greater than the first confidence. The processing control component may calculate distance information within a full detection distance range, that is, distance information within a range of Z0 to Z2, based on the second electrical signal from the d-TOF image sensor; and multiply the distance information (that is, distance information within a range of Z0 to Z1) of a distance not greater than the preset value (Z1) in the distance information within the full detection distance range by a third confidence, and multiply the distance information (that is, distance information within a range of Z1 to Z2) of a distance greater than the preset value within the full detection distance range by a fourth confidence, to obtain sixth distance information, and generate a fourth image based on the sixth distance information, where the fourth confidence is greater than the third confidence; and fuse the third image and the fourth image are fused to obtain a depth map of the target.

The first distance information is divided into two parts, a part that is not greater than the preset value is multiplied by the second confidence that is larger, and a part that is greater than the preset value is multiplied by the first confidence that is smaller. That is, in the first distance information, the part that is not greater than the preset value accounts for a larger proportion, and the part that is greater than the preset part accounts for a smaller proportion. Similarly, the second distance information is also divided into two parts, a part that is not greater than the preset value is multiplied by the third confidence that is smaller, and a part that is greater than the preset value is multiplied by the fourth confidence that is larger. The depth map of the target obtained based on the fifth distance information and the sixth distance information has high precision within the full detection distance range.

In an example 2, the first distance information is multiplied by a fifth confidence to obtain seventh distance information, and a fifth image is generated based on the seventh distance information. The fifth confidence is negatively correlated with the first distance information. That is, the fifth confidence decreases as the first distance increases. The second distance information is multiplied by a sixth confidence to obtain eighth distance information, and a sixth image is generated based on the eighth distance information. The sixth confidence is positively correlated with the second distance information. That is, the sixth confidence increases as the second distance increases. The fifth image and the sixth image are fused to obtain a depth map of the target.

It should be noted that, a specific function relationship between the fifth confidence and the first distance may be linear or non-linear, and a specific function relationship between the sixth confidence and the second distance may be linear or non-linear. This is not limited in this application.

With reference to FIG. 8, when both the first distance information and the second distance information are Z1, the fifth confidence is the same as the sixth confidence. For example, when the first distance information is Z0, the fifth confidence is 1. When the first distance information is Z1, the fifth confidence is 0.5. That is, the fifth confidence decreases as the first distance increases. When the second distance information is Z1, the sixth confidence is 0.5. When the second distance information is Z2, the sixth confidence is 1. That is, the sixth confidence increases as the second distance increases.

It should be noted that, in the foregoing two implementations of image fusion, error distance information corresponding to an elliptical region within a range Z0 to Z1 in the first distance information may be replaced with target distance information corresponding to the error distance in the second distance information.

In a possible implementation, a first processing component may be a processor, a microprocessor, or the like, for example, may be a general-purpose central processing unit (central processing unit, CPU), a general-purpose processor, or digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof.

It should be noted that, if the detection apparatus does not include the foregoing processing control component, functions of the foregoing processing control component may be performed by a processor in a terminal device in which the detection apparatus is used. For example, when the detection apparatus is used in a vehicle, functions of the processing control component described above may be performed by a main processor in the vehicle. For another example, when the detection apparatus is used in a smartphone, functions of the foregoing processing control component may be performed by a CPU in the smartphone.

The receiving component in the detection apparatus in any one of the foregoing embodiments may further include a lens assembly. The lens assembly is configured to converge, as much as possible, received return optical signals from the detection region to the d-TOF image sensor and/or the i-TOF image sensor. Further, optionally, the receiving component may further include an infrared ray (infrared radiation, IR) filter. The IR filter may be located between the lens assembly and the light splitting component. The IR filter may be configured to block or absorb infrared rays to prevent damage to the d-TOF image sensor and i-TOF image sensor. For example, a material of the IR filter may be glass or glass-like resin, for example, blue glass (blue glass).

Based on the foregoing content, the following provides two specific examples of the foregoing detection apparatus with reference to a specific hardware structure, to help further understand the structure of the foregoing detection apparatus.

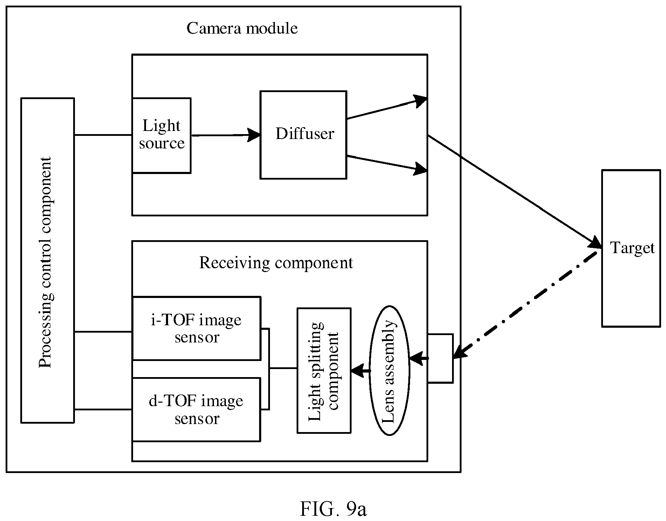

FIG. 9a is a schematic diagram of a structure of still another detection apparatus according to this application. The detection apparatus may include an emitting component, a light splitting component, a first detection component, a second detection component and a processing control component. The light splitting component is the light splitting component based on the foregoing case 1. For descriptions of the emitting component, the light splitting component based on the case 1, the first detection component, the second detection component, and the processing control component, refer to the foregoing related descriptions. Details are not described herein again.

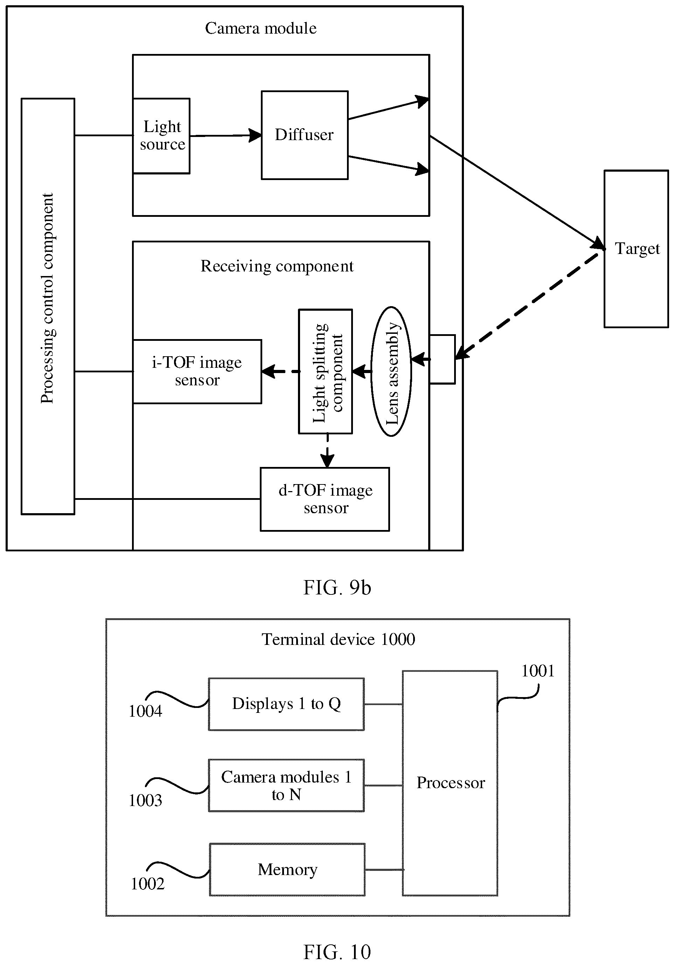

FIG. 9b is a schematic diagram of a structure of still another detection apparatus according to this application. The detection apparatus may include an emitting component, a light splitting component, a first detection component, a second detection component and a processing control component. The light splitting component is the light splitting component based on the foregoing case 2. For descriptions of the emitting component, the light splitting component based on the case 2, the first detection component, the second detection component, and the processing control component, refer to the foregoing related descriptions. Details are not described herein again.

It should be noted that, an emitting module, a lens assembly, and the like of the detection apparatus in the conventional art may be reused as the emitting module in the detection apparatus.

Based on the foregoing described structure and function principles of the detection apparatus, this application may further provide a camera. The camera may include the detection apparatus in any one of the foregoing embodiments. It may also be understood that the detection apparatus in any one of the foregoing embodiments may be independently used as a camera. Further, optionally, the camera may generate a grayscale image, or may be an infrared camera for imaging.

Based on the foregoing described structure and function principles of the detection apparatus, this application may further provide a terminal device. The terminal device may include the detection apparatus in any one of the foregoing embodiments and a processor. The processor is configured to control the detection apparatus to detect the detection region. Further, optionally, the terminal device may further include a memory. The memory is configured to store a program or instructions. The processor is configured to invoke the program or the instructions to control the detection apparatus to detect the detection region. It may be understood that the terminal device may further include another component, for example, a wireless communication apparatus, a touchscreen, and a display.

FIG. 10 is a schematic diagram of a structure of a terminal device according to this application. In this example, the detection apparatus is an example of a camera module. The terminal device 1000 may include a processor 1001, a memory 1002, a camera module 1003, a display 1004, and the like. It should be understood that the hardware structure shown in FIG. 10 is merely an example. The terminal device to which this application is applicable may have more or fewer components than the terminal device shown in FIG. 10, may combine two or more components, or may have different component configurations. Various components shown in FIG. 10 may be implemented in hardware, software, or in a combination of hardware and software that includes one or more signal processing and/or application-specific integrated circuits.

The processor 1001 may include one or more processing units. For example, the processor 1001 may include an application processor 1001 (application processor, AP), a graphics processing unit 1001 (graphics processing unit, GPU), an image signal processor 1001 (image signal processor, ISP), a controller, a digital signal processor 1001 (digital signal processor, DSP), and the like. Different processing units may be independent components, or may be integrated into one or more processors 1001.

The memory 1002 may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art. For example, the memory 1002 is coupled to the processor 1001, so that the processor 1001 can read information from the memory 1002 and can write information to the memory 1002. Certainly, the memory 1002 may alternatively be a part of the processor 1001. Certainly, the processor 1001 and the memory 1002 may alternatively exist in the terminal device as discrete components.

The camera module 1003 may be configured to capture a moving image, a static image, and the like. In some embodiments, the terminal device may include one or N camera modules 1003, and N is a positive integer. For descriptions of the camera module 1003, refer to the descriptions in the foregoing embodiment. Details are not described herein again.

When the camera module 1003 is used as an in-vehicle camera module, based on functions of the in-vehicle camera module, the camera module 1003 may be classified into a driving assistance camera module, a parking assistance camera module, and an in-vehicle driver monitoring camera module. The driving assistance camera module is configured for driving recording, lane departure warning, door opening warning, blind area monitoring, traffic sign recognition, and the like. The driving assistance camera module includes: an intelligent front-view camera (which is, for example, monocular, binocular, or tricular), which can be configured for dynamic object detection (vehicles and pedestrians), static object detection (traffic lights, traffic signs, lane lines, and the like), free space division, and the like; a side-view assistance camera (which is, for example, wide-angle), configured to monitor dynamic targets in a rear-view mirror blind spot during driving; and a night vision assistance camera (for example, a night vision camera), which can be configured to better detect target objects at night or under poor light conditions. The parking assistance camera module can be configured for a reversing image or 360-degree surround view. The 360-degree surround view (for example, wide-angle/fisheye) is mainly for low-speed short-distance perception and can form a seamless 360-degree panoramic view around a vehicle. The in-vehicle driver monitoring camera module mainly provides one or more levels of warning for the driver's fatigue, distraction, and non-standard driving. Based on different installation positions of the in-vehicle camera module in the terminal device, the in-vehicle camera module may be classified into a front-view camera module, a side-view camera module, a rear-view camera module, and a built-in camera module.

The display 1004 may be configured to display an image, a video, or the like. The display 1004 may include a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the terminal device may include one or Q displays 1004, where Q is a positive integer greater than 1. For example, the terminal device may implement a display function via the GPU, the display 1004, the processor 1001, and the like.

For example, the terminal device may be, for example, a radar (such as a lidar), a vehicle, a smartphone, a smart home device, an intelligent manufacturing device, a robot, an uncrewed aerial vehicle, an intelligent transportation device (such as an AGV or an unmanned transport vehicle).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "uniformity" does not mean absolute uniformity, and a specific error can be allowed. "Vertical" does not mean absolute verticality, and a specific engineering error can be allowed. "At least one" refers to one or more, and "a plurality of" refers to two or more. The term "and/or" is an association relationship for describing associated objects and represents that three relationships may exist. For example, A and/or B may represent the following three cases: Only A exists, both A and B exist, and only B exists, where A and B may be singular or plural. In text descriptions of this application, the character "/" generally indicates an "or" relationship between associated objects. In a formula of this application, the character "/" indicates a "division" relationship between the associated objects. In this application, a symbol "[a, b]" represents a closed interval, and a range thereof is greater than or equal to a and less than or equal to b. In addition, in this application, the term "for example" indicates giving an example, an illustration, or a description. Any embodiment or design scheme described as an "example" in this application should not be explained as being more preferred or having more advantages than another embodiment or design scheme. Alternatively, it may be understood that use of the term "example" is intended to present a concept in a specific manner, and does not constitute a limitation on this application.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes. The terms "first", "second", and another similar expression are intended to distinguish between similar objects but do not necessarily indicate a specific order or sequence. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices

Although this application is described with reference to specific features and embodiments thereof, it is clear that various modifications and combinations may be made to them without departing from the spirit and scope of this application. Correspondingly, the specification and accompanying drawings are merely examples for description of the solutions defined by the appended claims, and are considered as any of or all modifications, variations, combinations or equivalents that cover the scope of this application.

It is clear that a person skilled in the art can make various modifications and variations to this application without departing from the spirit and the scope of the present invention. In this way, this application is intended to cover these modifications and variations of embodiments of this application provided that they fall within the scope of protection defined by the claims of this application and their equivalent technologies.

## Claims

1. A detection apparatus, comprising an emitting component and a receiving component, wherein the receiving component comprises a light splitting component, a first detection component, and a second detection component; when a detection distance is less than a preset value, detection precision of the first detection component is greater than detection precision of the second detection component; when the detection distance is not less than the preset value, the detection precision of the first detection component is not greater than the detection precision of the second detection component;
the emitting component is configured to emit a first beam;
the light splitting component is configured to split a return optical signal of the first beam to obtain a first return optical signal and a second return optical signal, propagate the first return optical signal to the first detection component, and propagate the second return optical signal to the second detection component;
the first detection component is configured to detect the first return optical signal, to obtain a first electrical signal; and
the second detection component is configured to detect the second return optical signal, to obtain a second electrical signal, wherein
the first electrical signal and the second electrical signal are for determining distance information of a target.

2. The detection apparatus according to claim 1, wherein the first detection component comprises an indirect time-of-flight i-TOF image sensor, and the second detection component comprises a direct time-of-flight d-TOF image sensor.

3. The detection apparatus according to claim 1 or 2, wherein the light splitting component is configured to:
propagate, based on a received second control signal, the first return optical signal to the first detection component in a second time sequence, or propagate the second return optical signal to the second detection component in a third time sequence.

4. The detection apparatus according to claim 3, wherein the second time sequence and the third time sequence are alternately arranged.

5. The detection apparatus according to claim 3 or 4, wherein the light splitting component comprises any one of the following:
liquid crystal on silicon LCOS, an optical switch, a fiber circulator, or a digital micromirror device DMD.

6. The detection apparatus according to any one of claims 1 to 5, wherein the emitting component is configured to:
emit the first beam based on a received first control signal, wherein the first control signal is for controlling a first time sequence in which the emitting component emits the first beam.

7. The detection apparatus according to any one of claims 1 to 6, wherein the emitting component is configured to:
emit the first beam based on a received first modulation signal, wherein the first modulation signal comprises any one of the following:
a pulse wave or a continuous wave.

8. The detection apparatus according to claim 1 or 2, wherein the light splitting component is configured to:
split the return optical signal to obtain the first return optical signal and the second return optical signal, propagate the first return optical signal to the first detection component, and propagate the second return optical signal to the second detection component.

9. The detection apparatus according to claim 8, wherein the light splitting component comprises any one of the following:
a beam splitter or a diffractive optical element.

10. The detection apparatus according to claim 8 or 9, wherein the emitting component is configured to:
emit the first beam based on a received second modulation signal, wherein the second modulation signal comprises a pulse wave.

11. The detection apparatus according to any one of claims 2 to 10, wherein the detection apparatus further comprises a processing control component, configured to:
receive the first electrical signal from the first detection component and the second electrical signal from the second detection component; and
determine the distance information of the target based on the first electrical signal and the second electrical signal.

12. The detection apparatus according to claim 11, wherein the processing control component is configured to:
determine, based on the first electrical signal, a phase difference between emission of the first beam and reception of the first return optical signal, determine, based on the phase difference, a first time difference between the emission of the first beam and the reception of the first return optical signal, and determine, based on the second electrical signal, a second time difference between the emission of the first beam and reception of the second return optical signal; and
determine first distance information of the target based on the first time difference, and determine second distance information of the target based on the second time difference.

13. The detection apparatus according to claim 12, wherein the processing control component is further configured to:
determine error distance information corresponding to a multipath interference region or a strength error region in the first distance information;
determine target distance information that is in the second distance information and that corresponds to the error distance information; and
replace the error distance information with the target distance information.

14. The detection apparatus according to claim 12 or 13, wherein the processing control component is further configured to:
remove distance information of a distance greater than the preset value from the first distance information to obtain third distance information, and generate a first image based on the third distance information;
remove distance information of a distance not greater than the preset value from the second distance information to obtain fourth distance information, and generate a second image based on the fourth distance information; and
fuse the first image and the second image to obtain a depth map of the target.

15. The detection apparatus according to claim 12 or 13, wherein the processing control component is further configured to:
multiply distance information of a distance greater than the preset value in the first distance information by a first confidence, and multiply distance information of a distance not greater than the preset value in the first distance information by a second confidence, to obtain fifth distance information, and generate a third image based on the fifth distance information, wherein the second confidence is greater than the first confidence;
multiply distance information of a distance not greater than the preset value in the second distance information by a third confidence, and multiply distance information of a distance greater than the preset value in the second distance information by a fourth confidence, to obtain sixth distance information, and generate a fourth image based on the sixth distance information, wherein the fourth confidence is greater than the third confidence; and
fuse the third image and the fourth image to obtain a depth map of the target.

16. The detection apparatus according to claim 12 or 13, wherein the processing control component is further configured to:
multiply the first distance information by a fifth confidence to obtain seventh distance information, and generate a fifth image based on the seventh distance information, wherein the fifth confidence is negatively correlated with the first distance information;
multiply the second distance information by a sixth confidence to obtain eighth distance information, and generate a sixth image based on the eighth distance information, wherein the sixth confidence is positively correlated with the second distance information; and
fuse the fifth image and the sixth image to obtain a depth map of the target.

17. A terminal device, comprising a processor and the detection apparatus according to any one of claims 1 to 16, wherein the processor is configured to control the detection apparatus to detect a detection region.

18. The terminal device according to claim 17, wherein the terminal device comprises any one of the following:
a radar, a smartphone, a vehicle, a smart home device, an intelligent manufacturing device, a robot, an uncrewed aerial vehicle, or an intelligent transportation device.
